# EUROPEAN PATENT APPLICATION

(11) **EP 3 766 667 A1**
(43) Date of publication of application: **20.01.2021**
(21) Application number: 20020331.3
(22) Date of filing: 20.07.2020
(51) Int. Cl.: B29C 64/118, B29C 64/124, B29C 64/153, F27D 7/02, C21D 9/00, B33Y 80/00, B22F 3/105, B33Y 10/00

(54) **MANIFOLD ELEMENT**

(30) Priority: 18.07.2019 EP 19020433
(71) Applicant: Linde GmbH, 82049 Pullach (DE)
(72) Inventor: Hultstein, Eric, 19138 Sollentuna (SE); Graf, Michael, 82275 Emmering (DE); Neuner, Fabian, 80798 München (DE)
(74) Representative: Gellner, Bernd

(57) **Abstract**

The present invention relates to a manifold element (110) configured to be connected with at least one medium injection element (101) for injecting a medium into a furnace (100) and with at least one medium supply (121, 122) for supplying a medium to the at least one medium injection element (101), wherein the manifold element (110) is manufactured by an additive manufacturing process.

## Description

The present invention relates to a manifold element and to a method of manufacturing a manifold element configured to be connected with at least one medium injection element for injecting a medium into a furnace and with at least one medium supply for supplying a medium to the at least one medium injection element.

### Background of the invention

Heat treatment furnaces are used for the treatment or processing of certain materials in a controlled atmosphere. In order to feed the needed gases such as nitrogen, methanol, air, propane, methane, natural gas, ammonia, carbon dioxide, etc. into a corresponding treatment chamber of the furnace, medium injection elements such as lances can be provided. Most of these lances are tubes or tube in tube constructions which can contain several pieces such as fittings and connectors. Further, some lances are designed as welded parts. At a gas inlet, these lances can comprise a manifold with which a medium supply can be connected for supplying a corresponding gas to the lance.

Since burnable and toxic gases can be used, it is desirable that a firm connection between medium supply and medium injection element can be accomplished such that no leakages can occur.

### Disclosure of the invention

According to the invention a manifold element and a method of manufacturing a manifold element with the features of the independent claims are proposed. Advantageous further developments form the subject matter of the dependent claims and of the subsequent description.

The manifold element is configured to be connected with at least one medium injection element, such as a lance, for injecting a medium into a furnace, particularly a heat treatment furnace, and with at least one medium supply for supplying a medium to the at least one medium injection element. According to the present invention, the manifold element is manufactured by an additive manufacturing process.

Additive manufacturing, commonly also referred to as "3D printing", is a manufacturing process wherein a three-dimensional object is created by successively adding material layer by layer, in contrast to conventional manufacturing processes like milling or cutting, wherein material is removed from a stock item until the desired object remains, or like casting, wherein liquid material is injected into a mould, i.e. a negative form of the object to be created.

In the course of additive manufacturing consecutively a new layer of material, e.g. in liquid state or as a powder, is applied to the thus far created object, and subsequently solidified and firmly bonded with the layer(s) below, e.g. by means of a laser of electron beam. Additive manufacturing processes are usually computer controlled in dependence of a predetermined three-dimensional theoretical model of the object to be created, e.g. a computer aided design (CAD) model.

The additive manufacturing process can for example be selective laser sintering (SLS), selective laser melting (SLM), stereolithography (SL), electron beam melting (EBM), fused filament fabrication (FFF) or fused deposition modelling (FDM).

In the course of selective laser sintering (SLS) a laser is used to sinter powdered material. Selective laser melting (SLM), often also referred to as laser beam melting (LBM) or direct metal laser sintering (DMLS), is a process similar to selective laser sintering (SLS), wherein material usually in form of a powder is melted by a laser. In a selective laser sintering (SLS) process, the powder is heated up by the laser up to a specific point where the powder grains can fuse together. In contrast to that, the powder material in a selective laser melting (SLM) process can be fully melted and liquefied by the laser beam. By means of an SLM process, porosity and crystal structure of the object to be manufactured can be controlled.

Stereolithography (SL) is based on photochemical processes, wherein light is used to link chemical monomers together to form polymers. Electron beam melting (EBM) is a process, wherein material, e.g. as a powder or wire, is placed under a vacuum and fused together by means of an electron beam. In the course of fused filament fabrication (FFF) or fused deposition modelling (FDM) a continuous filament of a thermoplastic material is fed from a large coil through a moving, heated printer extruder head and is deposited on the growing object.

The additive manufacturing process provides a possibility to produce the manifold element precisely fitted and adapted to the at least one medium injection element and the at least one medium supply it shall be connected with. The manifold element can particularly be manufactured as a solid piece or tight body with ports, connection means and the like, with which the at least one medium injection element and the at least one medium supply can tightly and firmly be connected such that no leakages can occur. A design with a minimum number of fittings and connections can be provided to reduce the risk of leakages.

Additive manufacturing makes it for example possible to easily customise an inner part without changing an outer part and its connections sizes. Particularly, the manifold element can be designed and manufactured such that an optimised mixing and flow of different mediums inside the medium injection element can be achieved. Further, the manifold element can easily be manufactured with an optimised design such that thermal energy of the mediums fed through the manifold element can be utilised to extract heat for cooling purposes. Moreover, additive manufacturing provides a possibility to manufacture the manifold element in a timesaving manner with low cost and low effort.

Common medium injection elements like lances usually comprise common manifolds with threaded connections, which involve the risk of leakages due to a large amount of threaded connections. In contrast to that, the amount of threaded connections of the present additive manufactured manifold element can be reduced. A great number of different medium inlets can be provided which is usually not easily possible by conventional manufacturing methods.

Further, a flexible adaption to different operational scenarios is usually not easily possible with common lances and common manifolds. If e.g. changes are required and additional liquids shall be used, usually the amount of threaded connections will increase as well as the time and effort needed for the assembly due to the increased amount of threaded connections. In contrast to that, additive manufacturing yields the possibility of easily producing different prototype manifold elements for a new operational scenario and to determine the best possible design of the manifold element optimised to the new specific scenario.

The manifold element is therefore particularly configured to provide one or several different mediums to the medium injection element(s), e.g. nitrogen, methanol, air, propane, methane, natural gas, ammonia, carbon dioxide, etc., which can then be provided to the corresponding furnace, particularly a heat treatment furnace for treatment or processing of a certain material in a controlled atmosphere. The medium can particularly be provided in a gaseous or liquid state but it is also possible to expediently provide a solid medium.

The manifold element can especially comprise at least two inlet ports in order to connect at least two different medium supplies. Thus, the manifold element is particularly configured to provide at least two different mediums to the medium injection element and particularly enables to provide different gas inlets at a corresponding lance of a furnace, especially a heat treatment furnace, in a cost effective manner with low expenditure.

Further, the manifold element can especially comprise at least two outlet ports such that a tube in tube construction or particularly a tube in tube in tube construction can be provided. The manifold element makes it possible to easily create different chambers for this tube in tube construction.

According to a particularly preferred embodiment, a theoretical three-dimensional model of the manifold element is created and the manifold element is preferably manufactured according to the theoretical three-dimensional model. This model is particularly a computer based model, e.g. a computer aided design (CAD) model of the manifold element to be manufactured. Thus, the possibility is provided to theoretically develop an optimised design of the manifold element which can digitally be tested e.g. by computer simulations or the like. Further, the theoretical three-dimensional model can easily be adapted to new operational scenarios, such that an improved manifold element for the new scenario can be manufactured. In contrast to traditional manufacturing methods like casting or cutting, additive manufacturing provides much more flexibility, since a variety of different manifold elements can be produced easily and with low costs, simply by adapting or varying the theoretical model. In order to produce different prototypes it is for example not necessary to first of all expensively create different moulds for each different prototype, as it would e.g. be the case for casting processes.

Advantageously, the manifold element is manufactured from a metal material. Particularly, the manifold element is thus manufactured as one solid piece of metal and a tight metal body, which expediently comprises necessary medium inlets for the connection with the at least one medium supply and further necessary medium outlets for the connection with the at least one medium injection element. However, the manifold element can also be made of a plastic material or can comprise elements made of a plastic material, e.g. a plastic cap on a metal body.

Preferably, the manifold element comprises at least one outlet port configured to be connected with the at least one medium injection element. Shape and dimensions of each outlet port can particularly be fitted to the corresponding medium injection element it shall be connected with.

Advantageously, the at least one medium injection element is connected with the at least one outlet port, preferably by welding. Threaded connections can therefore be avoided and a sealed connection can be provided such that no leakages can occur.

Preferably, the manifold element comprises at least one inlet port configured to be connected with the at least one medium supply. Accordingly to the inlet ports, also the shape and dimensions of each inlet port can particularly be fitted to the corresponding medium supply.

Advantageously, the at least one medium supply is connected with the at least one inlet port, preferably by welding. Thus, also between the medium supply and the manifold element, threaded connections can be avoided and a sealed connection can be provided in order to avoid leakages.

According to a particularly preferred embodiment, the at least one inlet port and/or the at least one outlet port are manufactured with a specific shape and/or specific dimensions depending on the medium to be conducted through the corresponding port. Therefore, shape and/or dimensions of the ports are particularly designed in order to improve the flow of the corresponding medium through the manifold element and through the medium injection element. Particularly, the additive manufacturing production technique gives the possibility to influence flow behaviour inside the manifold element, especially to influence a pressure drop. This can e.g. be achieved by specifically designed channels or additional features such as surface roughness.

Common medium injection elements like lances usually comprise small outlet diameters and can therefore suffer from blockage after an extended operating time. This can occur due to cracking of certain mediums, which are volatile at low or moderate temperatures, e.g. methanol. If formed soot is deposited on the lance outlet, its diameter can over time be reduced and hence a pressure drop over the lance can be increased. In a worst case scenario a complete blockage can occur such that mediums cannot flow through the lance any longer. This circumstance can cause extensive costs, since a blocked lance elaborately has to be refurbished. By means of the additive manufactured manifold element depositions and blockages of these kinds can particularly be avoided. Due to the specific shape and/or dimensions the corresponding medium can be ejected from the medium injection element in an optimised manner, such that little or no depositions and thus no blockage can occur at the outlet of the medium injection element.

Particularly, an inlet port and/or an outlet port of the manifold element, through which methanol is to be conducted, are manufactured with a specific shape and/or specific dimensions. These specific shape and/or dimensions expediently improve the flow of liquid or vaporised methanol through the medium injection element. Thus, depositions and blockages can particularly be avoided.

According to the invention, the manifold element comprises at least one electronic port configured to be connected with at least one electronic element. Electronic elements of that kind can expediently be sensors, actuators, status indicators, signal cables, etc. By means of these sensors, physical and/or chemical quantities of the medium can expediently be measured, e.g. temperature, pressure, flow, etc. Thus, the medium inside the manifold element as well as the manifold element itself and the medium injection element connected to it can particularly be monitored. Failure or defect can timely be detected. For example, if methanol is conducted through the manifold element and the medium injection element, temperature and pressure can be monitored to have full control of the methanol cracking behaviour.

The term electronic port is particularly to be understood as a port into which the corresponding electronic element can be arranged. Particularly, the electronic port can be provided for housing or holding the corresponding electronic element and can e.g. be a slot in which the corresponding electronic element can be inserted. For example, the electronic port can be a port for a signal cable or a connection port for a sensor. For example electronic elements with an internal power source can be provided, e.g. sensors with an internal battery.

By means of the electronic ports, corresponding electronic elements can be built in locally into the manifold element to perform corresponding electronic features especially independent of external control units. The manifold element is therefore not only configured to provide transport of mediums but also to perform additional electronic features, especially to gather and/or process electronic data. By means of these electronic elements, the manifold element and thus the medium injection element can be made "Industry 4.0" compatible. "Industry 4.0" is a term in automation engineering, which characterises the interconnection of different kinds of devices of machines or plants with each other as well as their connection to the internet or the so called "Internet of Things" (loT). These connected devices can communicate and interact with each other and can further be remotely monitored and controlled. It is however also possible to use an external control unit, e.g. an external programmable logic controller (PLC), which can communicate with the electronic element(s).

Preferably, at least one electronic element is connected with the at least one electronic port, particularly by a detachable connection. Thus, corresponding electronic elements can easily be removed from or inserted into the manifold element. Electronic elements can thus easily be replaced, e.g. if the electronic element is defect or if shall be replaced by a new or a different electronic element in order to perform a different function.

According to a particularly advantageous embodiment, at least one sensor and at least one status indicator are connected with the at least one electronic port. The at least one status indicator is advantageously configured to indicate a status in dependence of a measurement of the at least one sensor. The corresponding sensor or sensors are particularly provided for measuring a temperature and/or a pressure. The status indicator can for example be provided as a light or lamp, e.g. as a light emitting diode (LED), which can particularly change its colour to indicate different behaviours, e.g. such that different colours can represent different ranges of measured temperature or pressure. The light of lamp as status indicator can further e.g. be used to illuminate a semi-opaque plastic cap, which can be fitted on the manifold element. Therefore, all electronics and processed sensor data are particularly built in locally in the manifold element in order to indicate the status of the manifold element itself and/or the medium injection element, expediently independent of an external control unit.

Advantageously, at least one fin and/or at least one opening are manufactured inside the manifold element. For example, these fins can be provided as cooling fins. The openings can for example be provided as channels for the medium. Mediums fed through the manifold element can therefore for example be used to extract heat from on-board electronics, especially in the form of electronic elements connected with the electronic ports. Thus, a mean time before failures of such electronic components occur can particularly be increased. Further, the manifold element enables the possibility to use an inerting media, e.g. nitrogen, to purge the area where electronic elements are installed to avoid a flammable hazard.

Further advantages and embodiments of the invention will become apparent from the description and the appended figures.

It should be noted that the previously mentioned features and the features to be further described in the following are usable not only in the respectively indicated combination, but also in further combinations or taken alone, without departing from the scope of the present invention.

In the drawings
- Fig. 1: schematically shows a furnace comprising a preferred embodiment of a manifold element according to the present invention in a sectional side view,
- Fig. 2: schematically shows a preferred embodiment of a method according to the present invention as a block diagram,
- Fig. 3: schematically shows a preferred embodiment of a manifold element according to the present invention in perspectives views,
- Fig. 4: schematically shows a preferred embodiment of a manifold element according to the present invention in a perspective view,
- Fig. 5: schematically shows a preferred embodiment of a manifold element according to the present invention in a sectional perspective view,
- Fig. 6: schematically shows a preferred embodiment of a manifold element according to the present invention in a sectional side view and in a perspective view, and
- Fig. 7: schematically shows a preferred embodiment of a manifold element according to the present invention in sectional and perspective views.

### Detailed description of the figures

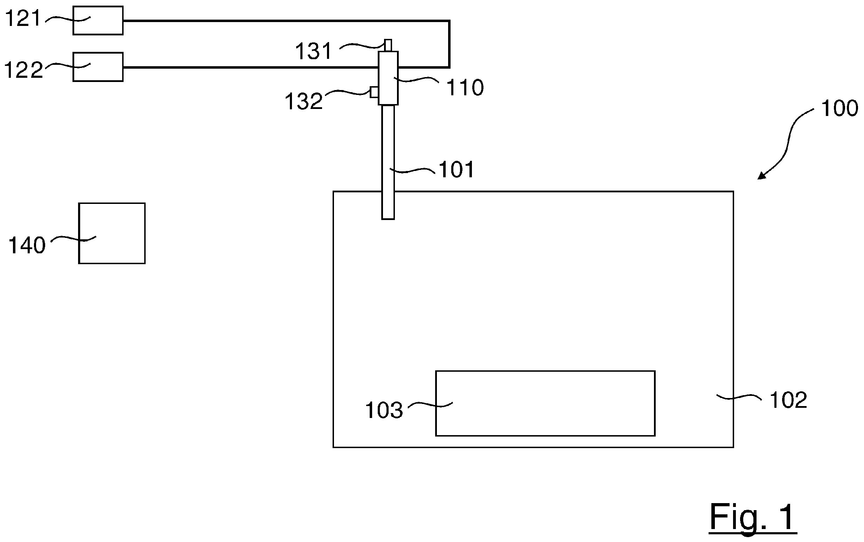

Fig. 1 schematically shows a heat treatment furnace 100 in a sectional side view.

The furnace 100 comprises a treatment chamber 102 in which a material 103 can be provided for heat treatment in a controlled atmosphere. In order to feed needed gases into the treatment chamber 102, a medium injection element in the form of a lance 101 is provided.

Depending on the material 103 to be processed and the atmosphere to be created, different gases can be fed to the chamber 102, for example nitrogen, methanol, air, propane, methane, natural gas, ammonia, carbon dioxide, etc.

In the present example a first medium supply 121 is provided for supplying a mixture of propane, air and nitrogen and a second medium supply 122 is provided for supplying methanol. Thus, a nitrogen-methanol based atmosphere can be created in the chamber 102. It is to be understood that also different numbers of medium supplies can be provided.

In order to connect the lance 101 with the medium supplies 121, 122, a preferred embodiment of a manifold element 110 according to the present invention is provided. This manifold element 110 is connected with the medium supplies 121, 122 as well as with the lance 101, for example by welding. The gases provided by the medium supplies 121, 122 are mixed in the manifold element 110 and afterwards conducted through the lance 101 and ejected into the chamber 102.

Further, electronic elements 131, 132 are connected with the manifold element 110, for example a sensor 131 to measure a temperature and a pressure and a status indicator 132, e.g. a light emitting diode (LED). This status indicator 132 is configured to indicate a status in dependence of a measurement of the sensor 131.

A control unit 140 is provided for controlling the furnace 100 and particularly the heat treatment process inside the furnace 100. The electronic elements 131, 132 can particularly communicate with the control unit 140, e.g. via a wireless connection.

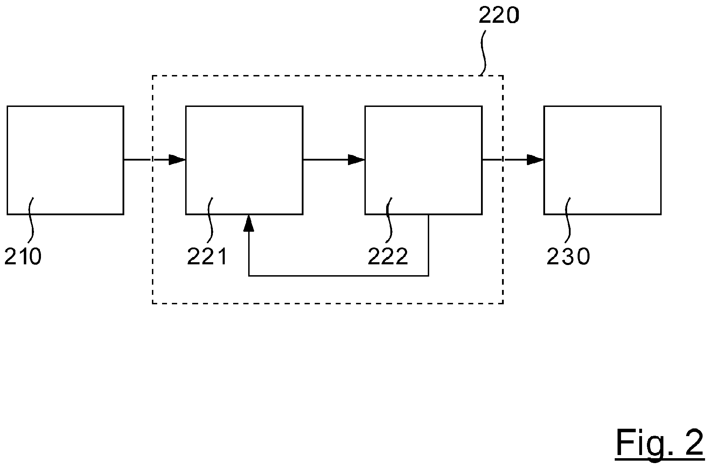

According to the present invention, the manifold element 110 is manufactured by an additive manufacturing process. A preferred embodiment of a method of manufacturing the manifold element according to the present invention is schematically shown in Fig. 2 as a block diagram.

In step 210, a theoretical three-dimensional model of the manifold element to be manufactured is created. This model is a computer based model, particularly a computer aided design (CAD) model. The manifold element can thus be designed adapted to its specific operation scenario. Particularly, manifold element and its ports can precisely be fitted to the specific medium supplies, medium injection elements and electronic elements, with which it shall be connected.

In step 220, the manifold element is manufactured according to the three-dimensional model by an additive manufacturing process, e.g. by selective laser melting (SLM), wherein material is successively added layer by layer.

In the course of the SLM process in step 221 a layer of material in the form of a powder is added. Afterwards this added layer of powder material is melted in step 222 by a laser beam and thus firmly bonded with layers underneath. These steps 221 and 222 are repeated until the manifoldd element is completely manufactured.

After the manifold element is manufactured, it is assembled in step 230 and connected with the corresponding medium supplies, medium injection elements and electronic elements.

The temperature measurement using the sensor 131 has two purposes. Firstly, the correct installation depths of the lance can be observed and monitored. A wrong placement leads to improper cracking results of the methanol. Secondly, the cracking behavior of the methanol can be monitored due to the latent heat of evaporation. A temperature increase directly correlates with a worse cracking behavior.

The pressure measurement monitors the flowrates of nitrogen and methanol and the condition of the lance and its nozzle. This could indicate either if the lance is slowly tending to block or if the nozzle hole, i.e. thegas outlet, becomes bigger due to thermochemical wear.

The integration of these additional measurement values into the complete thermoprocess equipment using the inventive manifold element and the correlation to existing measured process values can further improve the process transparency, failure detection and preventive maintenance.

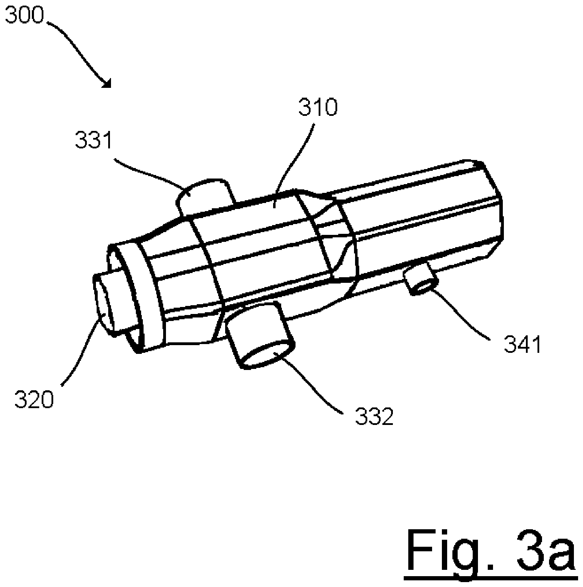

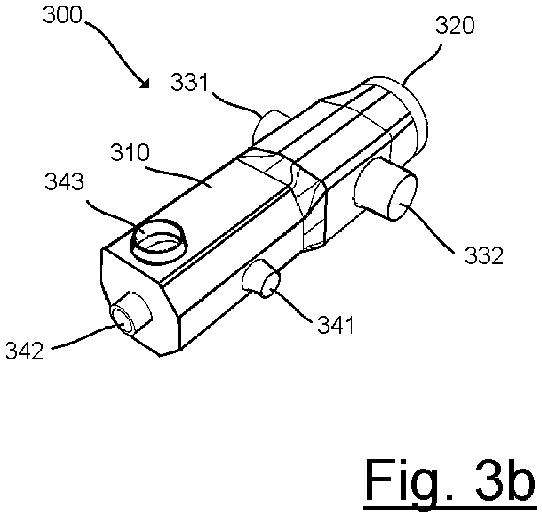

Figs. 3 to 6 show different examples of additive manufactured manifold elements according to preferred embodiments of the present invention.

In Fig. 3a and Fig. 3b a first example of a manifold element 300 according to a preferred embodiment of the present invention is schematically shown in a perspective view.

The manifold element 300 is manufactured a solid piece with a tight plastic housing 310. Further, the manifold element 300 comprises an outlet port 320 configured to be connected with a medium injection element, particularly a lance, especially by welding. Two inlet ports 331, 332 are provided and configured to be connected with a medium supply, especially also by welding. Further, three electronic ports 341, 342, 343 are provided, which are configured to be connected with electronic elements, e.g. sensors for measuring temperature, pressure, and flow, especially by a detachable connection.

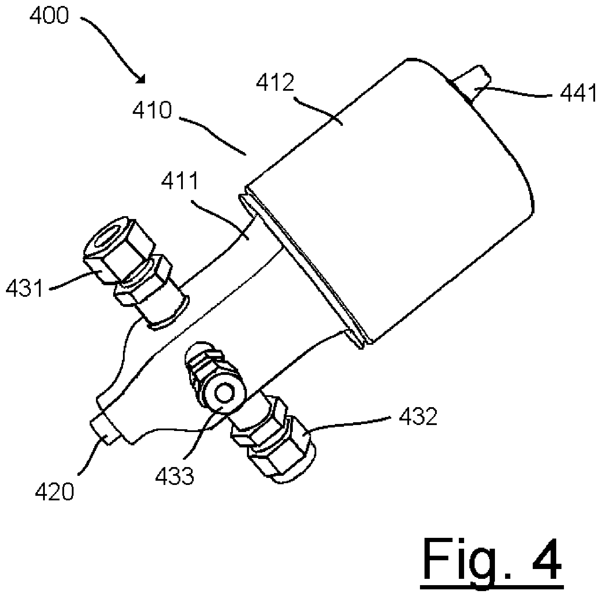

Fig. 4 schematically shows a second example of a manifold element 400 according to a preferred embodiment of the present invention in a perspective view.

The manifold element 400 comprises a tight body 410, wherein a first part 411 of the body 410 has an essentially cuboid shape and wherein a second part 412 has an essentially cylindrical shape. The first part 411 can e.g. be made of metal and can be a metal body. The second part can e.g. made of plastic and can be a plastic cap.

The manifold element 400 further comprises an outlet port 420 configured to be connected with a medium injection element and three inlet ports 431, 432, 433 configured to be connected with a medium supply. An electronic port 441 is provided to connect an electronic element like a signal cable with the manifold element 400.

The shapes of the different parts 411, 412 of the body can particularly be chosen such that mediums fed through the inlet ports 431, 432, 433 can mix inside the manifold element 400 in an optimised manner.

Further, shapes and dimensions of the inlet ports 431, 432, 433 differ and are particularly manufactured depending on the medium to be conducted through the corresponding port 431, 432, 433.

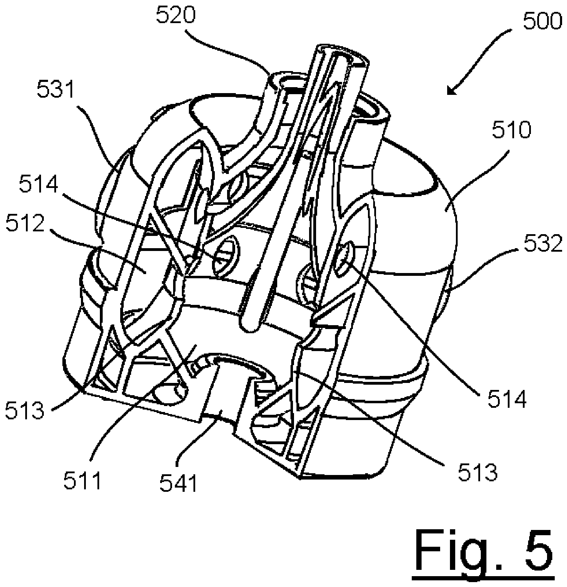

In Fig. 5 a third example of a manifold element 500 according to a preferred embodiment of the present invention is schematically shown in a sectional perspective view.

The manifold element 500 also comprises a tight metal body 510, an outlet port 520 to be connected with a medium injection element and two inlet ports 531, 532 to be connected with a medium supply. Further, an electronic port 541 is provided to be connected with a sensor.

The inside of the metal body 510 comprises a first chamber 511 and a second chamber 512. The chambers 511, 512 are defined by inner walls 513, in which channels 514 are provided such that the first chamber 511 and the second chamber 512 are in fluid communication. Shapes and dimensions of these two chambers 511, 512, the inner walls 513 and the channels 514 are particularly chosen such that mediums fed through the ports 531, 532 mix inside the manifold element 500 in an optimised manner.

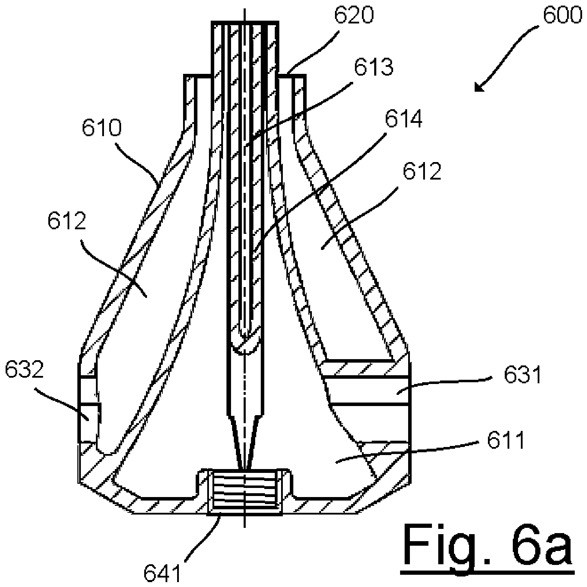

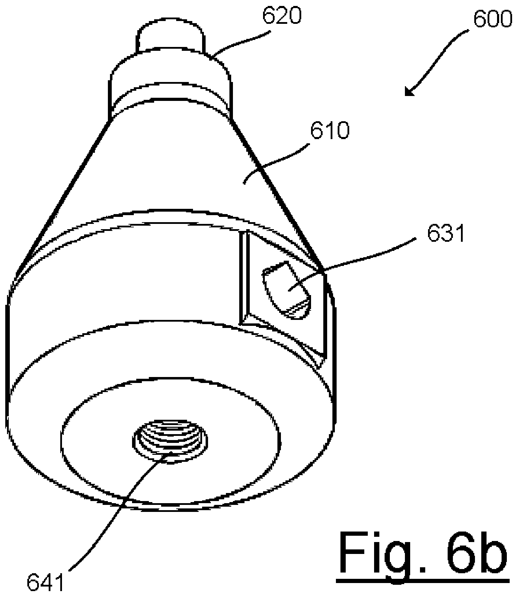

Fig. 6a schematically shows a fourth example of a manifold element 600 according to a preferred embodiment of the present invention in a sectional side view. Fig. 6b schematically shows this manifold element 600 in a perspective view.

This manifold element 600 comprises a tight metal body 610, an outlet port 620 to be connected with a medium injection element, two inlet ports 631, 632 to be connected with a medium supply, and an electronic port 641 to be connected with a sensor, e.g. for measuring a temperature and a pressure.

Three chambers 611, 612 and 613 are provided inside the body 610 wherein a medium fed through inlet port 631 directly enters a first chamber 611 and that a medium fed through inlet port 632 directly enters a second chamber 612. A third chamber 613 is defined by inner walls 614.

As can be see in Fig. 6b, the inlet port 631 has a specific shape which is particularly chosen depending on the medium to be conducted through this port 631, expediently to improve the flow of the medium through the manifold element 600 and through a medium injection element connected with the outlet port 620. Further, this shape can expediently be chosen to improve the way the medium is ejected from the connected medium injection element. For example when methanol is to be conducted through this port 631, this shape can be provided to improve the flow of liquid or vaporised methanol such that no depositions and blockages can occur.

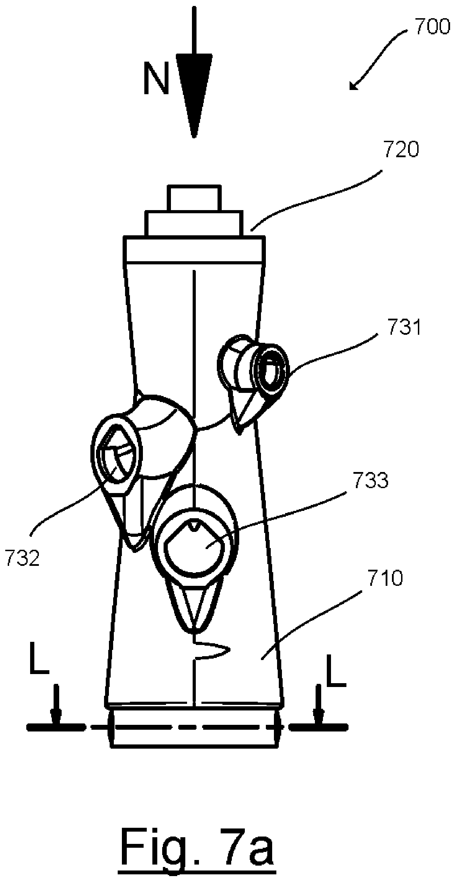

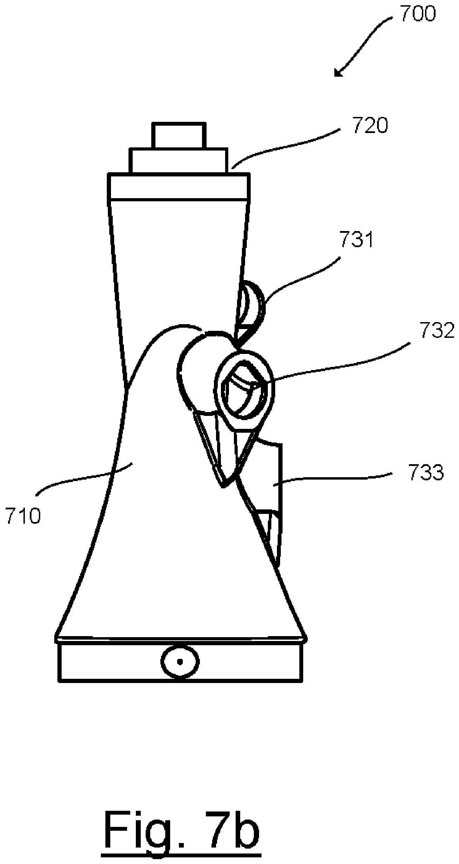

Fig. 7a and Fig. 7b schematically show a fifth example of a manifold element 700 according to a preferred embodiment of the present invention in perspective views. The manifold element 700 comprises a tight plastic body 710 with an outlet port 720 to be connected with a medium injection element and with three inlet ports 731, 732, 733 to be connected with a medium supply. Each inlet port 731, 732, 733 particularly has a specific shape depending on the medium to be conducted through the corresponding port.

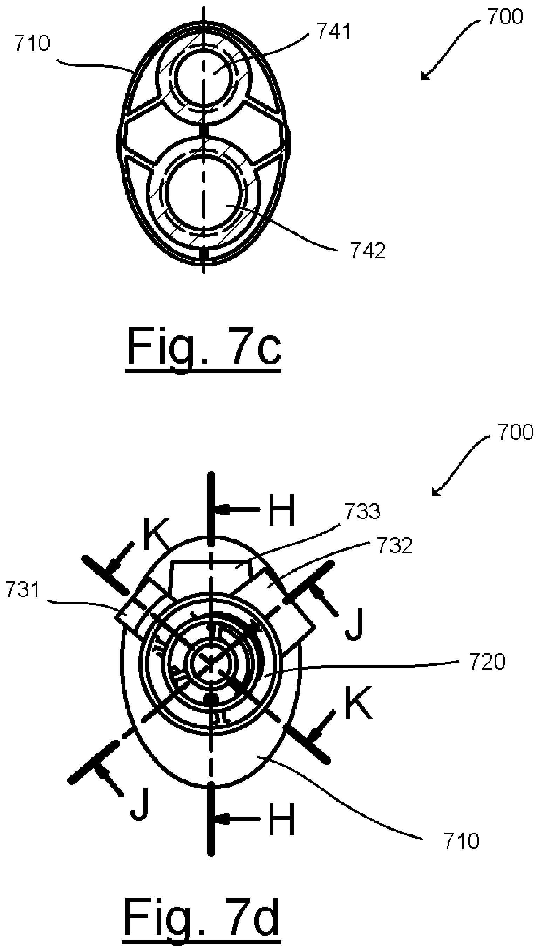

Fig. 7c schematically shows a sectional view of the manifold element 700 along the line L-L of Fig. 7a. As can be seen, the manifold element 700 further comprises two electronic ports 741, 742 to be connected with a status indicator, e.g. a light emitting diode (LED), and a sensor, e.g. for measuring a temperature and a pressure.

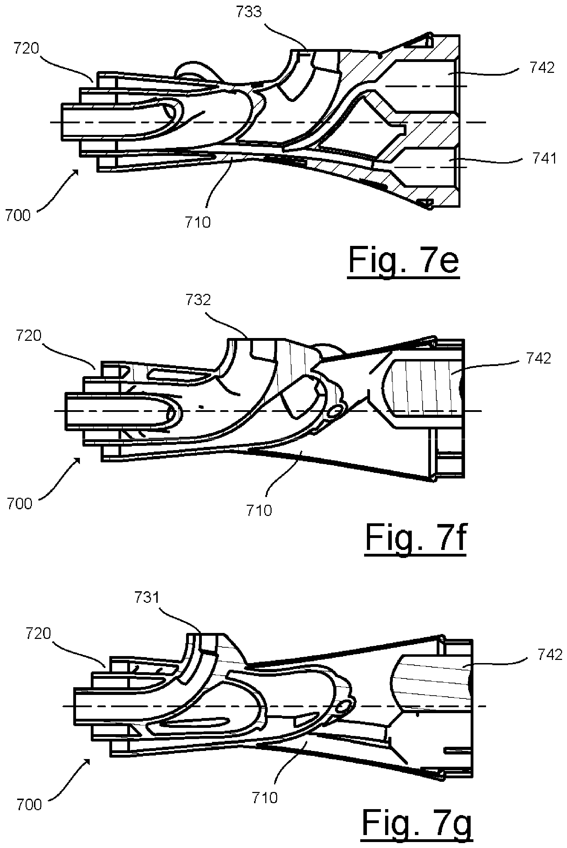

Fig. 7d schematically shows the manifold element 700 in a top view along the arrow N of Fig. 7a. Fig. 7e schematically shows the manifold element 700 in a sectional side view along the line H-H of Fig. 7d. A sectional side view of the manifold element 700 along the line J-J of Fig. 7d is schematically shown in Fig. 7f. In Fig. 7g a sectional side view of the manifold element 700 along the line K-K of Fig. 7d is schematically shown.

### Reference list

- 100: furnace, heat treatment furnace
- 101: medium injection element, lance
- 102: treatment chamber
- 103: material to be processed
- 110: manifold element
- 121: medium supply
- 122: medium supply
- 131: electronic element, sensor
- 132: electronic element, status indicator
- 140: control unit

- 210: method step, creating of a three-dimensional model
- 220: method step, additive manufacturing process, selective laser melting
- 221: method step, adding a layer of powder metallic material
- 222: method step, melting the added layer of powder metallic material
- 230: method step, assembly

- 300: manifold element
- 310: tight body
- 320: outlet port
- 331: inlet port
- 332: inlet port
- 341: electronic port
- 342: electronic port
- 343: electronic port

- 400: manifold element
- 410: tight body
- 411: first part, metal body
- 412: second part, plastic cap
- 420: outlet port
- 431: inlet port
- 432: inlet port
- 433: inlet port
- 441: electronic port

- 500: manifold element
- 510: tight metal body
- 511: first chamber
- 512: second chamber
- 513: inner walls
- 514: channels
- 520: outlet port
- 531: inlet port
- 532: inlet port
- 541: electronic port

- 600: manifold element
- 610: tight metal body
- 611: first chamber
- 612: second chamber
- 613: third chamber
- 614: inner walls
- 620: outlet port
- 631: inlet port
- 632: inlet port
- 641: electronic port

- 700: manifold element
- 710: tight body
- 720: outlet port
- 731: inlet port
- 732: inlet port
- 733: inlet port
- 741: electronic port
- 742: electronic port

## Claims

1. Manifold element (110, 300, 400, 500, 600, 700) configured to be connected with at least one medium injection element (101) for injecting a medium into a furnace (100) and with at least one medium supply (121, 122) for supplying a medium to the at least one medium injection element (101), **characterised in that** the manifold element comprises at least one electronic port configured to be connected with at least one electronic element and that the manifold element (110, 300, 400, 500, 600, 700) is manufactured by an additive manufacturing process (220).

2. Manifold element according to claim 1, wherein the manifold element (110, 300, 400, 500, 600) is manufactured from a metal material.

3. Manifold element according to claim 1 or 2, wherein the manifold element (110, 300, 400, 500, 600, 700) comprises at least one outlet port (320, 420, 520, 620, 720) configured to be connected with the at least one medium injection element (101).

4. Manifold element according to claim 3, wherein the at least one medium injection element (101) is connected with the at least one outlet port (320, 420, 520, 620, 720), particularly by welding.

5. Manifold element according to any one of the preceding claims, wherein the manifold element (110, 300, 400, 500, 600, 700) comprises at least one inlet port (331, 332, 431, 432, 433, 531, 532, 533, 631, 632, 731, 732, 733) configured to be connected with the at least one medium supply (121, 122).

6. Manifold element according to claim 5, wherein the at least one medium supply (121, 122) is connected with the at least one inlet port (331, 332, 431, 432, 433, 531, 532, 533, 631, 632, 731, 732, 733), particularly by welding.

7. Manifold element according to any one of the claims 3 to 6, wherein the at least one inlet port (320, 420, 520, 620, 720) and/or the at least one outlet port (331, 332, 431, 432, 433, 531, 532, 533, 631, 632, 731, 732, 733) are manufactured with a specific shape and/or specific dimensions depending on the medium to be conducted through the corresponding port.

8. Manifold element according to any one of the preceding claims, wherein the manifold element (110, 300, 400, 500, 600, 700) comprises at least one electronic port (341, 342, 343, 441, 641, 741, 742) configured to be connected with at least one electronic element (131, 132).

9. Manifold element according to claim 8, wherein at least one electronic element is connected with the at least one electronic port (341, 342, 343, 441, 641, 741, 742), particularly by a detachable connection.

10. Manifold element according to claim 8 or 9, wherein at least one sensor (131) and at least one status indicator (132) are connected with the at lest one electronic port (341, 342, 343, 441, 641, 741, 742), wherein the at least one status indicator (132) is configured to indicate a status in dependence of a measurement of the at least one sensor (131).

11. Manifold element according to any one of the preceding claims, wherein inside the manifold element at least one fin and/or at least one opening are manufactured.

12. A method of manufacturing a manifold element according to any one of the preceding claims, wherein the manifold element (110, 300, 400, 500, 600, 700) is manufactured by an additive manufacturing process (220).

13. The method according to claim 12, wherein a theoretical three-dimensional model of the manifold element (110, 300, 400, 500, 600, 700) is created (210) and wherein the manifold element (110, 300, 400, 500, 600, 700) is manufactured according to the theoretical three-dimensional model (220).
